(19) Europäisches Patentamt
European Patent Office
Office européen des brevets

(11) EP 4 815 442 A1

(12) EUROPEAN PATENT APPLICATION

(43) Date of publication:
**30.09.2026 Bulletin 2026/40**

(21) Application number: **25305414.2**

(22) Date of filing: **24.03.2025**

(51) International Patent Classification (IPC):
***H04N 19/117*** (2014.01) ***G06N 3/048*** (2023.01)
***H04N 19/172*** (2014.01) ***H04N 19/70*** (2014.01)
***H04N 19/82*** (2014.01) ***H04N 19/86*** (2014.01)

(52) Cooperative Patent Classification (CPC):
**H04N 19/117; G06N 3/044; G06N 3/045; G06N 3/048; G06N 3/063; G06N 3/08; G06N 3/084; H04N 19/172; H04N 19/70; H04N 19/82; H04N 19/86**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
- **DEMARTY, Claire-Helene**
  **35520 MONTREUIL LE GAST (FR)**
- **FRANCOIS, Edouard**
  **35890 BOURG DES COMPTES (FR)**
- **AUMONT, Franck**
  **35770 VERN SUR SEICHE (FR)**
- **LE MEUR, Olivier**
  **35160 TALENSAC (FR)**

(74) Representative: **Interdigital**
**Immeuble ZEN 2**
**845 A, avenue des Champs Blancs**
**35510 Cesson-Sévigné (FR)**

# (54) UPDATING NNPF RELATED INFORMATION IN NNPFA UPON UPDATE OF THE NNPF PURPOSES

(57) A method and apparatus for updating metadata of NNPF are provided. A neural-network post-filter activation (NNPFA) message associated to at least one picture of a video is received wherein the NNPFA message indicates that at least one neural-network post-filter (NNPF) is to be applied to the at least one picture. From the NNPFA, an indication is obtained that indicates whether at least one purpose of the at least one NNPF is updated. An update value of at least one parameter of the at least one NNPF is obtained and a value of the at least one parameter of the at least one NNPF is updated with the update value. The at least one NNPF is applied for the updated purpose using the at least one parameter set to the update value.

400

Obtaining indication that purpose of NNPF is updated
410
Obtaining update value of NNPF parameters
420
Updating value of NNPF parameters
430
Applying updated NNPF
440

FIG. 4

EP 4 815 442 A1

## Description

## BACKGROUND

The present application is related to video compression post filtering and more particularly to signaling relating to neural network post filter at the decoder side.

The present application relates to neural-network post-filter SEI messages and neural-network post-filter activation SEI messages.

## BRIEF SUMMARY

Briefly stated, in one embodiment, a method for updating metadata of an NNPF is provided. The method comprises obtaining, from a neural-network post-filter activation (NNPFA) message associated to at least one picture of a video, the NNPFA message indicating that at least one neural-network post-filter (NNPF) is to be applied to the at least one picture, an indication indicating whether at least one purpose of the at least one NNPF is updated, obtaining an update value of at least one parameter of the at least one NNPF, updating a value of the at least one parameter of the at least one NNPF with the update value, and applying the at least one NNPF for the updated purpose using the at least one parameter set to the update value.

In another embodiment, an apparatus is provided. The apparatus comprises one or more processors configured to obtain, from a neural-network post-filter activation (NNPFA) message associated to at least one picture of a video, the NNPFA message indicating that at least one neural-network post-filter (NNPF) is to be applied to the at least one picture, an indication indicating whether at least one purpose of the at least one NNPF is updated, obtain an update value of at least one parameter of the at least one NNPF, update a value of the at least one parameter of the at least one NNPF with the update value, and apply the at least one NNPF for the updated purpose using the at least one parameter set to the update value.

In another embodiment, a method for signaling updated metadata for NNPF is provided wherein the method comprises signaling, in a neural-network post-filter activation (NNPFA) message associated to at least one picture of a video, the NNPFA message indicating that at least one neural-network post-filter (NNPF) is to be applied to the at least one picture, an indication indicating whether at least one purpose of the at least one NNPF is updated, and signaling an update value of at least one parameter of the at least one NNPF.

In another embodiment, an apparatus is provided. The apparatus comprises one or more processors configured to signal, in a neural-network post-filter activation (NNPFA) message associated to at least one picture of a video, the NNPFA message indicating that at least one neural-network post-filter (NNPF) is to be applied to the at least one picture, an indication indicating whether at least one purpose of the at least one NNPF is updated, and signal an update value of at least one parameter of the at least one NNPF.

In another embodiment, a signal is provided that comprises a neural-network post-filter activation (NNPFA) message associated to at least one picture of a video, the NNPFA message indicating that at least one neural-network post-filter (NNPF) is to be applied to the at least one picture, an indication indicating whether at least one purpose of the at least one NNPF is updated, the signal comprising an update value of at least one parameter of the at least one NNPF.

One or more embodiments also provide a computer program comprising instructions which when executed by one or more processors cause the one or more processors to perform any one of the methods for updating metadata of NNPF or signaling updated metadata of NNPF according to any of the embodiments described herein. One or more of the present embodiments also provide a non-transitory computer readable medium and/or a computer readable storage medium having stored thereon instructions for performing the methods described herein.

One or more embodiments also provide a computer readable storage medium having stored thereon a signal or a bitstream generated according to the methods described herein. One or more embodiments also provide a method and apparatus for transmitting or receiving the bitstream generated according to the methods described above.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present

disclosure;

FIG. 3 is a block diagram illustrating an example video decoder according to one or more embodiments of the present disclosure;

FIG. 4 illustrates a method for updating parameters of a neural network post filter, according to one or more embodiments;

FIG. 5 illustrates a method for signaling updated parameters of a neural network post filter, according to one or more embodiments;

FIG. 6 illustrates an example of an implementation of a method for applying a neural network post filter according to one or more embodiments;

FIG. 7 shows two remote devices communicating over a communication network in accordance with an example of the present principles.

FIG. 8 shows the syntax of a signal in accordance with an example of the present principles.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

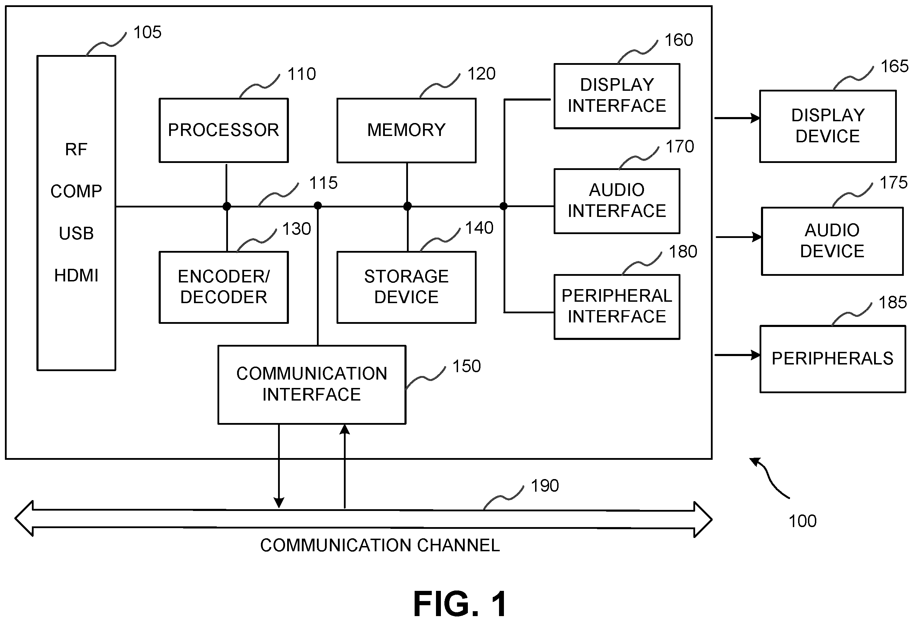

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device

140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

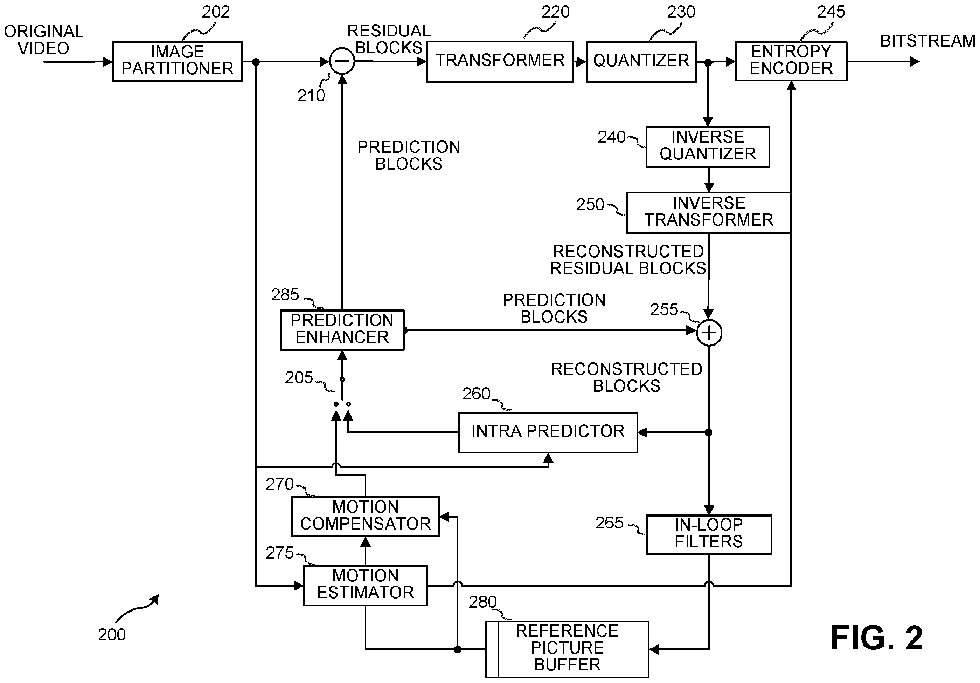

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

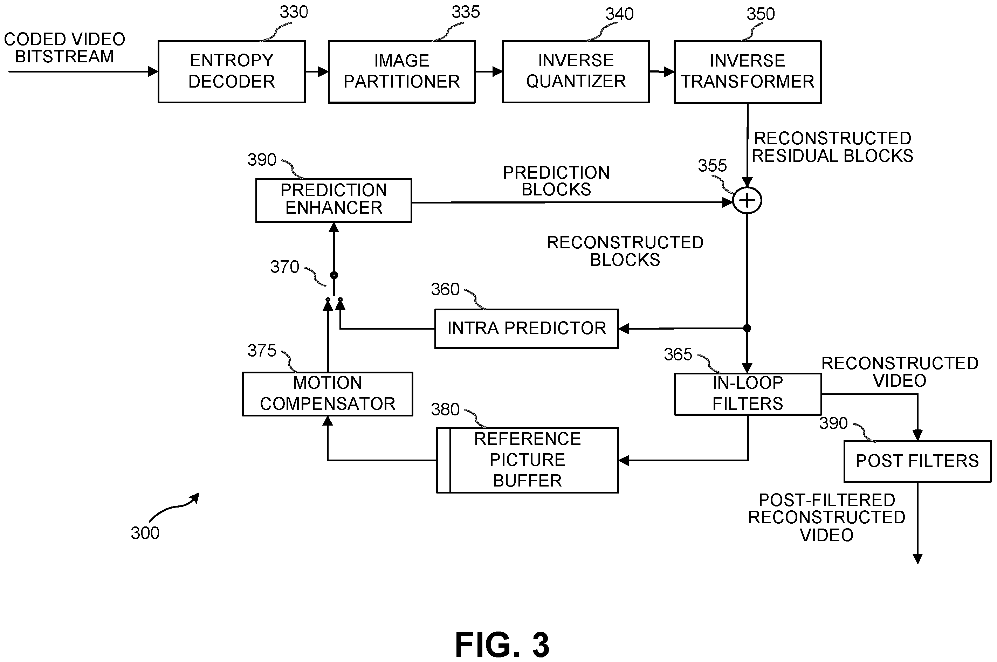

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and V (also denoted herein by *C).*

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating

metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

In the embodiments described herein, post filters 390 can be applied to reconstructed video data to produce post filtered reconstructed video. In the embodiments described herein, post filters 390 are neural network post filters. They take as input one or more picture of the reconstructed video and provides a filtered version of the input.

Embodiments described herein aim at providing neural-network post-filter SEI messages and neural-network post-filter activation SEI messages. The neural-network post-filter characteristics (NNPFC) SEI message specifies a neural network that may be used as a post-processing filter. The NNPFC SEI message allows an encoder to define a neural network to be used in a post-processing operation after the decoding operation. This message also specifies the input and output of the neural network and describes its complexity.

The NNPFC SEI message indicates the intended purpose of the neural network. Up to now, 8 modes have been

defined:

- Enhancing visual quality
- Chroma upsampling
- Changing spatial resolution, e.g., from high-definition decoded video to ultra-high definition
- Upsampling picture rate, e.g., from 30 Hz to 60 Hz
- Upsampling bit depth to increase the dynamic range of pixel values
- Colorization to convert monochrome video to full colors.
- Temporal extrapolation
- Spatial extrapolation
- Tone mapping

These modes are also described in the following table (Table 1) extracted from "Technologies under consideration for future extensions of VSEI (version 7) ", Sean McCarthy, Jill Boyce, Jie Chen, Sachin Deshpande, Miska M. Hannuksela, Hendry Tan, Ye-Kui Wang, JVET-AK2032-v1, 37th meeting , Geneva, CH, 14-22 January 2025

**Table** 1: Definition of nnpfc_purpose

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0x80 | Spatial extrapolation (i.e., generating content outside of the spatial area of the input pictures) |
| 0x100 | Tone mapping (i.e., modification of the colour samples values, in terms of contrast, colour, saturation, luminance) |

Purposes of a NNPF is thus transmitted to the decoder by the syntax element *nnpfc_purpose* indicated in the syntax of the NNPFC SEI message defining the NNPF. Purposes of the NNPF are then obtained from this syntax element by applying the bitMask associated with each purpose in Table 1 above.

The use of specified neural-network post-processing filters (NNPFs) for specific pictures is indicated with neural-network post-filter activation (NNPFA) SEI messages. An NNPFC SEI message, to be applied, needs to be activated by an NNPFA SEI message. The use for specific pictures of a neural-network post-processing filter specified in an NNPFC SEI message is indicated with one or more neural-network post-filter activation (NNPFA) SEI messages related to these pictures. The NNPFA SEI is used to activate an NNPFC SEI.

It is proposed in JVET-AL0076 *(*AHG9: On multi-purpose NNPFs, M. Hannuksela, F. Cricri, JVET-AL0076-v1, 38th meeting by Teleconference), to update the purposes of an NNPF by sending some information in the NNPFA SEI message related to the new list of purposes.

However, other NNPF important information (parameters specifying the specific characteristics of the NNPF) is related to the NNPF purpose, for example the output picture size, number of channels in the output picture, etc.

A neural network has specific characteristics such as the input image sizes (and more generally the input tensor sizes), the output image sizes (output tensor sizes), the number of channels of the input and output tensors, the list of needed input images, the number of output images, etc.

These characteristics are different from one neural network to another. These characteristics may also depend on the purpose of a given neural network. For example, if the neural network is intended to upsample a given input image, it is expected that the resolution of the output image will be different, for example the output image will have a higher resolution and consequently different image sizes. In another example, if the neural network is intended for colourization, i.e., adding color or chroma channels to an image by converting a gray level image into a color image, it is expected that the output image should have chroma channels, or chroma information.

A neural network may also be capable of conducting different tasks such quality enhancement and resolution

upsampling at the same time. It may have been trained for several tasks or purposes. It may be possible that such neural network may, depending on some variable parameter, produce either the output of all tasks it has been trained to, or the output of a subset of the tasks it has been trained to (for example the output of only one task).

In this case, depending on the chosen task(s), one single neural network may produce outputs with different characteristics, for example different resolutions.

The NNPFC and NNPFA SEI messages may enable the purposes of a neural network to be updated. However, no update of the related characteristics and information is done, consequently to these changes. Therefore, the decoder applying the NNPF is not informed of the related changes in the NNPF characteristics consecutive to an update of purpose of the NNPF.

In the document JVET-AL0076, the following semantics and syntax are proposed. Syntax changes proposed in JVET-AL0076 are shown in italic:

| **nn_post_filter_activation( payloadSize ) {** | **Descriptor** |
|---|---|
| **nnpfa_target_id** | ue(v) |
| **nnpfa_cancel_flag** | u(1) |
| if( !nnpfa_cancel_flag ) { | |
| **nnpfa_persistence_flag** | u(1) |
| **nnpfa_target_base_flag** | u(1) |
| **nnpfa_no_prev_clvs_flag** | u(1) |
| if( nnpfa_persistence_flag ) | |
| **nnpfa_no_foll_clvs_flag** | |
| **nnpfa_num_output_entries** | ue(v) |
| for( i = 0; i < nnpfa_num_output_entries; i++ ) | |
| **nnpfa_output_flag[ i ]** | u(1) |
| if( more_data_in_payload( ) ) { | |
| **nnpfa_prompt_update_flag** | u(1) |
| if( nnpfa_prompt_update_flag ) { | |
| while( !byte_aligned( ) ) | |
| **nnpfa_alignment_zero_bit** | u(1) |
| **nnpfa_prompt** | st(v) |
| } | |
| **nnpfa_num_input_pic_shift** | ue(v) |
| ***nnpfa_target_purposes_present_flag*** | *u(1)* |
| *if( nnpfa_target_purposes_present_flag )* | |
| ***nnpfa_target_purposes_idc*** | *u(16)* |
| } | |
| } | |
| } | |

Semantics of the syntax changes is as follows:

**nnpfa_target_purposes_present_flag** equal to 1 specifies that nnpfa_target_purposes_idc is present. nnpfa_target_purposes_present_flag equal to 0 specifies that nnpfa_target_purposes_idc is not present. When nnpfa_target_purposes_present_flag is not present, it is inferred to be equal to 0. When ( nnpfc_auxiliary_inp_idc & 8) is equal to 0, nnpfa_target_purposes_present_flag shall be equal to 0.

**nnpfa_target_purposes_idc** indicates the purpose of the NNPF as specified in Table 1 above, where ( nnpfa

_target_purposes_ide & bitMask ) not equal to 0 indicates that the NNPF has the purpose associated with the bitMask value in Table 1. When ( nnpfa_target_purposes_idc & bitMask ) is equal to 0, the purpose associated with the bitMask value is not applicable to the NNPF. When ( nnpfc_purpose & bitMask ) is equal to 0 for a particular bitMask value specified in Table 1 and nnpfa_target_purposes_present_flag is equal to 1, ( nnpfa_target_purposes_idc & bitMask ) shall be equal to 0. When present, the value of nnpfa_target_purposes_idc shall be less than nnpfc_purpose and greater than 0.

The variables ChromaUpsamplingFlag, ResolutionResamplingFlag, PictureRateUpsamplingFlag, BitDepthUpsamplingFlag, ColourizationFlag, and TemporalExtrapolationFlag, specifying whether nnpfc_purpose indicates the purpose of the NNPF to include chroma upsampling, resolution resampling, picture rate upsampling, bit depth upsampling, colourization, and temporal extrapolation, respectively, are derived as follows for the parsing of the nn_post_filter_characteristics syntax structure:

ChromaUpsamplingFlag = ( ( nnpfc_purpose & 0x02 ) > 0 ) ? 1 : 0
ResolutionResamplingFlag = ( ( nnpfc_purpose & 0x04 ) > 0 ) ? 1 : 0
PictureRateUpsamplingFlag = ( ( nnpfc_purpose & 0x08 ) > 0 ) ? 1 : 0 (75)
BitDepthUpsamplingFlag = ( ( nnpfc_purpose & 0x10 ) > 0 ) ? 1 : 0
ColourizationFlag = ( ( nnpfc_purpose & 0x20 ) > 0 ) ? 1 : 0
TemporalExtrapolationFlag = ( ( nnpfc_purpose & 0x40 ) > 0 ) ? 1 : 0
SpatialExtrapolationFlag = ( ( nnpfc_purpose & 0x80 ) > 0 ) ? 1 : 0

The variable nnpfPurpose, specifying the purpose of the NNPF to be used as auxiliary input data to the NNPF, is derived as follows:

- If nnpfa_target_purposes_idc is present, nnpfPurpose is set equal to nnpfa_target_purposes_idc.
- Otherwise, nnpfPurpose is set equal to nnpfc_purpose.

The variables ChromaUpsamplingFlag, ResolutionResamplingFlag, PictureRateUpsamplingFlag, BitDepthUpsamplingFlag, ColourizationFlag, and TemporalExtrapolationFlag, specifying whether nnpfc_ purpose indicates the purpose of the NNPF to include chroma upsampling, resolution resampling, picture rate upsampling, bit depth upsampling, colourization, and temporal extrapolation, respectively, are derived as follows for the derivation of variables and operation of the NNPF:

ChromaUpsamplingFlag = ( ( nnpfPurpose & 0x02 ) > 0 ) ? 1 : 0

ResolutionResamplingFlag = ( ( nnpfPurpose & 0x04 ) > 0 ) ? 1 : 0

PictureRateUpsamplingFlag = ( ( nnpfPurpose & 0x08 ) > 0 ) ? 1 : 0

BitDepthUpsamplingFlag = ( ( nnpfPurpose & 0x10 ) > 0 ) ? 1 : 0

ColourizationFlag = ( ( nnpfPurpose & 0x20 ) > 0 ) ? 1 : 0

TemporalExtrapolationFlag = ( ( nnpfPurpose & 0x40 ) > 0 ) ? 1 : 0

SpatialExtrapolationFlag = ( ( nnpfPurpose & 0x80 ) > 0 ) ? 1 : 0

In the syntax above, it clearly appears that the only new information signaled in the NNPFA is a flag indicating whether the purpose is updated and of so, the new purpose. When the purpose of a NNPF is updated by sending (at encoder side)/receiving (at decoder side) a new NNPFA SEI message, no information is given in the NNPFA SEI

messages to transmit updated NNPF information (updated NNPF specific characteristics) adapted to the updated purposes.

Embodiments described herein aim at updating one or more of the related parameters of a NNPF subsequently to an update of the NNPF purposes. The embodiments described herein can be implemented in a video encoder (for example 200 in FIG. 2), and in a video decoder (300 in FIG. 3) for example in the Post filters module (390).

A neural network has specific characteristics such as the input image sizes (and more generally the input tensor sizes), the output image sizes (output tensor sizes), the number of channels of the input and output tensors, the list of needed input images, the number of output images, etc.

These characteristics are different from one neural network to another. These characteristics may also depend on the purpose of a given neural network.

A neural network may also be capable of conducting different tasks each for different purposes at the same time. It may be possible that such neural network may, depending on some variable parameter, produce either the output of both tasks, or the output of one or the other tasks.

In this case, depending on the chosen task(s), one single neural network may produce outputs with different characteristics, for example different resolutions.

Upon an update of neural network's purpose, embodiments described herein provide for adding the possibility to update the metadata (parameters) adapted to the updated purpose(s) in the NNPFA SEI message.

In an embodiment, when the purpose of the NNPF is updated in the NNPFA, parameters of the NNPF adapted to the updated purpose are also updated in the NNPFA.

For example, when a purpose of the NNPF is updated by turning it on (i.e. enabling use of the NNPF for the purpose), specific values of the parameters related to this new purpose of the NNPF are sent in the NNPFA. For example, the NNPF is designed for mutiple purposes, but not all purposes are enabled at first, because of rate-distortion optimization, bitrate adaptation or available resources at the decoder. Then, at some point, the encoder decides that a given purpose of the NNPF that was disabled shall be enabled for some pictures. Then, a NNPFA is sent wherein the given purpose is enabled and corresponding values of metadata/parameters related to this given purpose are sent.

In another example, when a purpose of the NNPF is updated by turning it off (i.e. disabling use of the NNPF for the purpose), parameters related to this purpose can be set back to default values so that the decoder works properly.

For example, when a NNPF is designed for several purposes, for example for resolution upsampling and quality enhancement, a single NNPFC SEI message defining the NNPF can be sent to the decoder. A first NNPFA SEI message is then sent for activating the NNPF for a picture. For example, the encoder decides that the picture does not need resolution upsampling by the NNPF, for example based on rate-distortion optimization or bitrate adaptation, the first NNPFA SEI message can disable the resolution upsampling purpose for the picture. In a variant of the embodiments described herein, metadata/parameters related to this purpose are set to default values. For example, size of pictures output by the NNPF is updated since the resolution upsampling is not done.

When another picture is encoded for example at a lower resolution, the encoder decides that this other picture needs use of resolution upsampling purpose by the NNPF. A second NNPFA SEI message is sent for activating the NNPF for the other picture, wherein the purpose of resolution upsampling is enabled. According to the embodiments described herein, values of metadata/parameters related to the purpose of resolution upsampling are also sent to update the metadata related to this purpose.

In a variant, the decoder can store different sets of parameters relates to a purpose, for example a set of parameters related to the purpose being disabled and a set of parameters related to the purpose being enabled.

In a variant, the parameters are related to the format of the output tensor or output images produced by the NNPF, such as output sizes, resampling ratio numerator, resampling ratio denominator, output chroma, colour format, sizes of the chroma channels, number of interpolated pictures between to input pictures, number of extrapolated pictures, sizes used for computing spatial extrapolation of the input pictures, preferred display method for the pictures output by the NNPF.

In another variant, different sets of parameters can be updated using different control syntax elements (e.g., flags).

In another variant, when the purpose of the NNPF is updated in the NNPFA, parameters of the NNPF adapted to the updated purpose are set back to some default values depending on the values of updated purposes. These default values are either set to hard-coded values, or inferred from previously sent values in the NNPFC SEI message. For example, the resampling ratio numerator may be set back to 1 in case the corresponding purpose is no more activated. In another example, the expected output sizes of the NNPF may be set back to the output sizes as defined and sent in the NNPF SEI message.

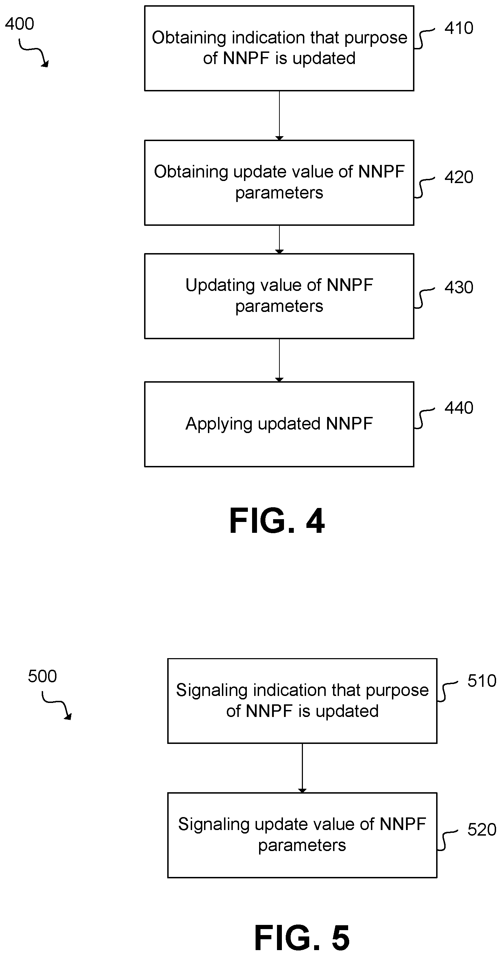

FIG. 4 illustrates a method 400 for updating parameters/metadata of a neural network post filter, according to one or more embodiments. For example, method 400 is implemented by one or more processors of a video decoder outputting a reconstructed video after decoding a video stream or by a post-processing processor coupled to the video decoder. The one or more processors are coupled with a memory and the NNPFC SEI message defining an NNPF has been received as well as an NNPFA message activating the NNPF for one or more pictures of the reconstructed video.

At 410, an indication indicating whether at least one purpose of the NNPF is updated is obtained from the NNPF A message. In some variants, an update of a purpose can be enabling a new purpose for the NNPF or deactivating a previously enabled purpose for the NNPF.

At 420, an update value of at least one parameter of the NNPF is obtained, where the at least one parameter is related to the new (updated) purpose of the NNPF.

In a variant, the update value is obtained from the NNPFA message. In another variant, the update value is obtained from another message. In another variant, the update value is a default (hard-coded or already sent through the NNPFC message) value which depends on the updated purpose.

In a variant, step 420 of obtaining an update value is performed in response to a determination that the indication obtained at 410 indicates that the at least one purpose of the NNPF is updated. In another variant, a value of a control parameter is obtained, for example a flag, and the step 420 of obtaining an update value is performed in response to a determination that the value of the control parameter indicates that a value of the at least one parameter is to be updated. In a variant, the value of the control parameter is signaled in the NNPFA message. In another variant, the value of the control parameter is inferred from a determination that the purpose of the NNPF has been updated. For example, the value of the control parameter can be inferred by determining whether purposes of the NNPF indicated in a neural-network post-filter characteristics (NNPFC) message defining the NNPF are different from purposes of the NNPF indicated in the NNPFA message.

At 430, the value of the at least one parameter of the NNPF is updated with the update value obtained at 420. and at 440, the NNPF is applied for the updated purpose using the at least one parameter set to the update value.

FIG. 5 illustrates a method 500 for signaling updated parameters of a neural network post filter, according to one or more embodiments. The method is for example implemented by one or more processor of a video encoder or a post-processing device coupled to the video encoder. The one ore more processors generate a NNPFA message indicating that an NNPF is to be applied to one or more pictures of the video. At 510, an indication is signaled in the NNPFA message indicating whether at least one purpose of the at least one NNPF is updated and at 520, an update value of at least one parameter of the NNPF is signaled, where the at least one parameter is related to the new (updated) purpose of the NNPF.

Embodiments and variants described in reference to the method 400 at the decoder side described above also apply to the method 500 performed on the encoder side.

As described above, in an embodiment, updated metadata related to the updated purpose(s), i.e., the use, of the NNPF and of the output generated by the NNPF, are sent to the decoder in order that the NNPF characteristics are adapted to the updated purpose. Generally, all metadata that need to be updated subsequently to the update on one or more of the purposes of a given NNPF are sent, for the NNPF to work properly and for the output of the NNPF to be properly interpreted by subsequent processings after the NNPF, for example, other post processings, machine analysis or displays.

In another embodiment, only specific metadata are sent. In this embodiment, the updated information relate to the format of the output tensor or output images produced by the NNPF, such as information related to the output sizes, the resampling ratio numerator, the resampling ratio denominator, the output chroma or colour format, the sizes of the chroma channels, the number of interpolated pictures between to input pictures, the number of extrapolated pictures, the sizes used for computing the spatial extrapolation of the input pictures, the preferred display method for the pictures output by the NNPF.

Examples of semantics of the added metadata are provided below.

The following added metadata are proposed which described the update of the resampling ratio numerator, the resampling ratio denominator, the output colour format, the sizes of the chroma channels, the number of interpolated pictures between two input pictures, the number of extrapolated pictures, the sizes used for computing the spatial extrapolation of the input pictures, the preferred display method for the pictures output by the NNPF.

In variant, sending all of or any combination of these metadata may be envisioned. It is possible to indicate which part of the metadata are updated by using different control parameters/flags, either signaled, or inferred.

For example, the variables ChromaUpsamplingUpdateFlag, ResolutionResamplingUpdateFlag, PictureRateUpsamplingUpdateFlag, BitDepthUpsamplingUpdateFlag, ColourizationUpdateFlag, and TemporalExtrapolationUpdateFlag, are used to specify whether there was an update of a specific purpose, for example when updating and replacing the *nnpfc_purpose* set in the NNPFC message by the use of *nnpfa_target_purposes_idc* set in the NNPFA message.

ChromaUpsamplingUpdateFlag = ( ( nnpf_purpose & 0x02 ) == ( nnpfa_target_purposes_idc &0x02)) ? 0 : 1

ResolutionResamplingUpdateFlag = ( ( nnpf_purpose & 0x04 ) == ( nnpfa_target_purposes_idc &0x04)) ? 0 : 1

PictureRateUpsamplingUpdateFlag = ( ( nnpf_purpose & 0x08 ) == ( nnpfa_target_purposes_idc &0x08)) ? 0 : 1

BitDepthUpsamplingUpdateFlag = ( ( nnpf_purpose & 0x10 ) == ( nnpfa_target_purposes_idc &0x10)) ? 0 : 1

ColourizationUpdateFlag = ( ( nnpf_purpose & 0x20) > 0) == ( nnpfa _target_purposes_ide &0x20)) ? 0 : 1

TemporalExtrapolationUpdateFlag = ( ( nnpf_purpose & 0x40 ) ) == ( nnpfa_target_purposes_idc &0x40)) ? 0 : 1

SpatialExtrapolationUpdateFlag = ( ( nnpf_purpose & 0x80 ) ) == ( nnpfa_target_purposes_idc &0x80)) ? 0 : 1

The value of these flags can control the signaling of the following parameters (this is further described in the semantics table below), that are updates of the equivalent parameters signaled in the NNPFC SEI message to which the NNPFA is associated.

**nnpfa_out_sub_c_flag** specifies the values of the variables outSubWidthC and outSubHeightC when ChromaUpsamplingFlag is equal to 1. nnpfa_out_sub_c_flag equal to 1 specifies that outSubWidthC is equal to 1 and outSubHeightC is equal to 1. nnpfa_out_sub_c_flag equal to 0 specifies that outSubWidthC is equal to 2 and outSubHeightC is equal to 1. When ChromaFormatIdc is equal to 2 and nnpfa_out_sub_c_flag is present, the value of nnpfa_out_sub_c_flag shall be equal to 1.

**nnpfa_out_colour_format_idc,** when ColourizationFlag is equal to 1, specifies the colour format of the NNPF-generated pictures and consequently the values of the variables outSubWidthC and outSubHeightC. nnpfa_out_colour_format_idc equal to 1 specifies that the colour format of the NNPF-generated pictures is the 4:2:0 format and outSubWidthC and outSubHeightC are both equal to 2. nnpfa out_colour_format_idc equal to 2 specifies that the colour format of the NNPF-generated pictures is the 4:2:2 format and outSubWidthC is equal to 2 and outSubHeightC is equal to 1. nnpfa_out_colour_format_idc equal to 3 specifies that the colour format of the NNPF-generated pictures is the 4:4:4 format and outSubWidthC and outSubHeightC are both equal to 1. The value of nnpfa_out_colour_format_idc shall not be equal to 0.

When ChromaUpsamplingFlag and ColourizationFlag are both equal to 0, outSubWidthC and outSubHeightC are inferred to be equal to SubWidthC and SubHeightC, respectively.

When ChromaUpsamplingFlag is equal to 0 and ColourizationFlag is equal to 1, the colour format of the NNPF-generated pictures and consequently the values of the variables outSubWidthC and outSubHeightC are specified according to the value of nnpfa out_colour_format_idc, or if not present according to the value of nnpfc_out_colour_format_idc.

When ChromaUpsamplingFlag is equal to 1 and ColourizationFlag is equal to 0, the colour format of the NNPF-generated pictures and consequently the values of the variables outSubWidthC and outSubHeightC are specified according to the value of nnpfa_out_sub_c_flag, or if not present according to the value of nnpfc_out_sub_c_flag.

When ChromaUpsamplingFlag is equal to 1 and ColourizationFlag is equal to 1, the colour format of the NNPF-generated pictures and consequently the values of the variables outSubWidthC and outSubHeightC are specified according first to the value of nnpfc_out_sub_c_flag or according to the value of nnpfa_out_sub_c_flag if it exists.

In a variant the semantics is modified as follows.

The **nnpfa_out_sub_c_flag** is a descriptor of size 2 bits.

**nnpfa_out_sub_c_flag** specifies the values of the variables outSubWidthC and outSubHeightC when ChromaUpsamplingFlag is equal to 1. nnpfa_out_sub_c_flag equal to 1 specifies that outSubWidthC is equal to 1 and outSubHeightC is equal to 1. nnpfa_out_sub_c_flag equal to 0 specifies that outSubWidthC is equal to 2 and outSubHeightC is equal to 1. nnpfa_out_sub_c_flag equal to 2 specifies that outSubWidthC and outSubHeightC should be inferred relatively to the value of nnpfa_out_colour_format_idc if ColourizationFlag is equal to 1. nnpfa_out_sub_c_flag equal to 2 specifies that outSubWidthC and outSubHeightC are inferred to be equal to SubWidthC and SubHeightC, respectively if ColourizationFlag is equal to 0. If ColourizationFlag is equal to 1 . nnpfa_out_sub_c_flag equal to 2 specifies that outSubWidthC and outSubHeightC are inferred to be equal to the sizes as defined by ColourizationFlag equal to 1, in relation with the value of nnpfa_out_colour_format_idc if it exists or nnpfa_out_colour_format_idc otherwise. When ChromaFormatIdc is equal to 2 and nnpfa_out_sub_c_flag is present, the value of nnpfa_out_sub_c_flag shall be equal to 1.

**nnpfa_out_colour_format_idc,** when ColourizationFlag is equal to 1, specifies the colour format of the NNPF-generated pictures and consequently the values of the variables outSubWidthC and outSubHeightC. nnpfa_out_colour_format_idc equal to 1 specifies that the colour format of the NNPF-generated pictures is the 4:2:0 format and outSubWidthC and outSubHeightC are both equal to 2. nnpfa out_colour_format_idc equal to 2 specifies that the colour format of the NNPF-generated pictures is the 4:2:2 format and outSubWidthC is equal to 2 and outSubHeightC is equal to 1. nnpfa_out_colour_format_idc equal to 3 specifies that the colour format of the NNPF-generated pictures is the 4:4:4 format and outSubWidthC and outSubHeightC are both equal to 1. The value of nnpfa_out_colour_format_idc shall not be

equal to 0. nnpfa_out_colour_format_idc equal to 4 specifies that the colour format of the NNPF-generated pictures is the same as the colour format of the input pictures of the NNPF and outSubWidthC and outSubHeightC are inferred to be equal to SubWidthC and SubHeightC, respectively if ChromaUpsamplingFlag equal to 0, or it specifies that the colour format of the NNPF-generated pictures and outSubWidthC and outSubHeightC shall be inferred as defined when ChromaUpsamplingFlag is equal to 1. The value of nnpfa_out_colour_format_idc shall not be equal to 0.

When ChromaUpsamplingFlag and ColourizationFlag are both equal to 0, outSubWidthC and outSubHeightC are inferred to be equal to SubWidthC and SubHeightC, respectively. **nnpfa_pic_width_num_minus1** plus 1 and **nnpfa_pic_width_denom_minus1** plus 1 specify the numerator and denominator, respectively, for the resampling ratio of the width of the NNPF-generated pictures relative to CroppedWidth. Both nnpfa_pic_width_num_minus1 and nnpfa_pic_width_denom_minus1 shall be in the range of 0 to 65 535, inclusive.

The value of ( nnpfa_pic_width_num_minus1 + 1 ) ÷ ( nnpfa_pic_width_denom_minus1 + 1 ) shall be in the range of 1 ÷ 16 to 16, inclusive. When nnpfa_pic_width_num_minus1 and nnpfa_pic_width_denom_minus1 are not present, the values of nnpfa_pic_width_num_minus1 and nnpfa_pic_width_denom_minus1 are both inferred to be equal to 0.

The variables nnpfcOutputPicWidth and nnpfcOutputPicHeight respectively represent the width and height of the luma sample arrays of the NNPF-generated pictures when SpatialExtrapolationFlag is equal to 0.

The variables nnpfcOutputPicWidth1 and nnpfcOutputPicHeight1 respectively represent the width and height of the luma sample arrays of the NNPF-generated pictures when SpatialExtrapolationFlag is equal to 1.

The variable nnpfcOutputPicWidth is derived as follows:

nnpfcOutputPicWidth = Ceil( CroppedWidth * ( nnpfa_pic_width_num_minus1 + 1 ) ÷ ( nnpfa_pic_width_denom_minus1 + 1 ) )

When SpatialExtrapolationFlag is equal to 1, nnpfcOutputPicWidth1 is derived as follows:

nnpfcOutputPicWidth1 = nnpfcOutputPicWidth + outSubWidthC * (nnpfa_spatial_extrapolation_left_offset + nnpfa_spatial_extrapolation_right_offset)

**nnpfa_pic_height_num_minus1** plus 1 and **nnpfa_pic_height_denom_minus1** plus 1 specify the numerator and denominator, respectively, for the resampling ratio of the height of the NNPF-generated pictures relative to CroppedHeight. Both nnpfa_pic_height_num_minus1 and nnpfa_pic_height_denom_minus1 shall be in the range of 0 to 65 535, inclusive.

The value of ( nnpfa_pic_height_num_minus1 + 1 ) ÷ ( nnpfa_pic_height_denom_minus1 + 1 ) shall be in the range of 1 ÷ 16 to 16, inclusive. When nnpfa_pic_height_num_minus1 and nnpfa_pic_height_denom_minus1 are not present, the values of nnpfa_pic_height_num_minus1 and nnpfa_pic_height_denom_minus1 are both inferred to be equal to 0.

The variable nnpfcOutputPicHeight is derived as follows:

nnpfcOutputPicHeight = Ceil( CroppedHeight *

( nnpfa_picheight_num_minus1 + 1 ) ÷ ( nnpfa_pic_height_denom_minus1 + 1 ) ))

When SpatialExtrapolationFlag is equal to 1, nnpfcOutputPicHeight1 is derived as follows:

nnpfcOutputPicHeight1 = nnpfcOutputPicHeight + outSubHeightC * ( nnpfa_spatial_extrapolation_top_offset + nnpfa_spatial _extrapolation_bottom_offset )

In a variant, when SpatialExtrapolationFlag is equal to 0 and ResolutionUpsamplingFlag is equal to 0, and when nnpfa_pic_width_num_minus1 and nnpfa_pic_width_denom_minus1 are not present, their values are inferred to be equal to 0.

In a variant, when SpatialExtrapolationFlag is equal to 0 and ResolutionUpsamplingFlag is equal to 0, and when nnpfa_pic_width_num_minus1 and nnpfa_pic_width_denom_minus1 are not present, nnpfc_pic_width_num_minus1 and nnpfc_pic_width_denom_minus1 are inferred to be equal to 0, or set to 0.

**nnpfa_interpolated_pics[ i ]** specifies the number of interpolated pictures generated by the NNPF between the i-th and the ( i + 1 )-th input picture for the NNPF. The value of nnpfa_interpolated_pics[ i ] shall be in the range of 0 to 63, inclusive. When the nnpfa_interpolated_pics[ i ] syntax elements are present, the value of nnpfa_interpolated_pics[ i ] shall

be greater than 0 for at least one value of i in the range of 0 to nnpfa_num_input_pics_minus1 - 1, inclusive.

In a variant, when PictureRateUpsamplingFlag is equal to 0, and when nnpfa_interpolated_pics[ i ] is not present, it is inferred to be equal to 0.

In a variant, when PictureRateUpsamplingFlag is equal to 0, and when nnpfa_interpolated_pics[ i ] is not present, the value of nnpfc_interpolated_pics[ i ] is inferred to be equal to 0 or set to 0.

**nnpfa_extrapolated_pics_minus1** plus 1 specifies the number of extrapolated pictures generated by the NNPF subsequent to all input pictures for the NNPF in output order. The value of nnpfa_extrapolated_pics_minus1 shall be in the range of 0 to 62, inclusive.

In a variant, when TemporalExtrapolationFlag is equal to 0, and when nnpfa_extrapolated_pics_minus1 is not present, it is inferred to be equal to -1.

In a variant, when TemporalExtrapolationFlag is equal to 0, and when nnpfa_extrapolated_pics_minus1 is not present, the value of nnpfc _extrapolated_pics_minus1 is inferred to be equal to -1 , or set to -1.

The variables NumInpPicsInOutputTensor, specifying the number of pictures that have a corresponding input picture and are present in the output tensor of the NNPF, InpIdx[ idx ], specifying the input picture index, to the list of input pictures in reverse output order, of the idx-th picture that is present in the output tensor of the NNPF and has a corresponding input picture, and numPicsInOutputTensor, specifying the total number of pictures present in the output tensor of the NNPF, are derived as follows:

```
for( i = 0, numPicsInOutputTensor = 0; i < numInputPics; i++ )
 if( nnpfa _input_pic_filtering_flag[ i ] ) {
    InpIdx[ numPicsInOutputTensor ] = i
    numPicsInOutputTensor++
 }
NumInpPicsInOutputTensor = numPicsInOutputTensor
if( PictureRateUpsamplingFlag )
 for( i = 0; i <= numInputPics - 2; i++ )
    numPicsInOutputTensor += nnpfa_interpolated_pics[ i ]
if( TemporalExtrapolationFlag )
 numPicsInOutputTensor += nnpfa_extrapolated_pics + 1
```

**nnpfa_spatial_extrapolation_left_offset, nnpfa_spatial_extrapolation_right_offset, nnpfa_spatial_extrapolation_top_offset,** and **nnpfa_spatial_extrapolation_bottom_offset** specify the spatial extrapolation area. When nnpfa_spatial_extrapolation_left_offset, nnpfa_spatial_extrapolation_right_offset, nnpfa_spatial_extrapolation_top_offset, and nnpfa_spatial_extrapolation_bottom_offset are each greater than or equal to 0, the luma samples with horizontal picture coordinates from outSubWidthC * nnpfa_spatial_extrapolation_left_offset to nnpfcOutputPicWidth1 - ( outSubWidthC * nnpfa _spatial_extrapolation__right_offset ) and vertical picture coordinates from outSubHeightC * nnpfa_spatial_extrapolation_top_offset to nnpfcOutputPicHeight1 - ( outSubHeightC * nnpfa_spatial_extrapolation_bottom_offset ) correspond to the spatial area of the input picture. The value of nnpfa_spatial_extrapolation_left_offset, nnpfa_spatial_extrapolation_right_offset, nnpfa_spatial_extrapolation_top_offset and nnpfa_spatial_extrapolation_bottom_offset shall be in the range of -65 536 to 65 536, inclusive. If SpatialExtrapolationFlag equal to 1, at least one of nnpfa_spatial_extrapolation_left_offset, nnpfa_spatial_extrapolation_right_offset, nnpfa_spatial_extrapolation_top_offset and nnpfa_spatial_extrapolation_bottom_offset shall be greater than 0.

In a variant, when SpatialExtrapolationFlag is equal to 0, when nnpfa_spatial_extrapolation_left_offset, nnpfa_spatial_extrapolation_right_offset, nnpfa_spatial_extrapolation_top_offset and nnpfa spatial_extrapolation_bottom_offset are not present, their values are inferred to be equal to 0.

In a variant, when SpatialExtrapolationFlag is equal to 0, when nnpfa_spatial_extrapolation_left_offset, nnpfa_spatial_extrapolation_right_offset, nnpfa_spatial_extrapolation_top_offset and nnpfa spatial_extrapolation_bottom_offset are not present, the values of the corresponding metadata in the NNPFC message are inferred to be equal to 0 or are set to 0.

**nnpfa_scan_type_idc** equal to 0 indicates that the preferred display method for the pictures output by the NNPF is unknown or unspecified or specified by external means. nnpfa_scan_type_idc equal to 1 indicates that the pictures output by the NNPF are suitable for display using overscan. nnpfa_scan_type_idc equal to 2 indicates that the pictures output by the NNPF contain visually important information in the entire region out to the edges of the picture, such that the pictures output by the NNPF should not be displayed using overscan. Instead, they should be displayed using either an exact match between the display area and the edges, or using underscan. As used in this paragraph, the term "overscan" refers to display processes in which some parts near the borders of the pictures are not visible in the display area. The term "underscan" describes display processes in which the entire pictures are visible in the display area, but they do not cover the entire display area. For display processes that neither use overscan nor underscan, the display area exactly matches the area of the pictures. The value of nnpfa_scan_type_idc shall not be equal to 2. When not present, the value of nnpfa_scan_type_idc is inferred to be equal to 0.

In a variant, upon an update of the NNPF purposes in the NNPFA, all related information is set to default values depending on the values of the new updated NNPF purposes.

For example, when ResolutionUpsamplingFlag is equal to 0 or when SpatialExtrapolationFlag is equal to 0, nnpfcOutputPicWidth and nnpfcOutputPicWidth1 are inferred to be equal to CroppedWidth and nnpfcOutputPicHeight and nnpfcOutputPicHeight1 are inferred to be equal to CroppedHeight. The parameters CroppedWidth and Cropped-Height are known from syntax elements present in the main bitstream (providing for example the decoded picture dimensions, the cropping offsets), usually signaled in the SPS or in the PPS. CroppedWidth and CroppedHeight indicate the dimension of the picture that is going to be output from the decoding process.

For example, when PictureRateUpsamplingFlag is equal to 0, nnpfc_interpolated_pics[ i ] is inferred to be equal to 0.

For example, when TemporalExtrapolationFlag is equal to 0, nnpfc_extrapolated_pics_minus1 is inferred to be equal to -1.

For example, when SpatialExtrapolationFlag is equal to 0, nnpfc_spatial_extrapolation_left_offset, nnpfc_spatial_extrapolation_right_offset, nnpfc_spatial_extrapolation_top_offset and nnpfc_spatial_extrapolation_bottom_offset are inferred to be equal to 0.

For example, when SpatialExtrapolationFlag and PictureRateUpsamplingFlag are both equal to 0, nnpfc_scan_type_idc is inferred to be equal to 0.

Syntax of the NNPFA SEI message with the addition of the metadata proposed in the embodiments above.

In an embodiment, the above metadata are carried within the NNPFA SEI message as described in the syntax table below. The added syntax is shown in italic.

| nn_post_filter_activation( payloadSize ) { | **Descriptor** |
|---|---|
| **nnpfa_target_id** | ue(v) |
| **nnpfa_cancel_flag** | u(1) |
| if( !nnpfa_cancel_flag ) { | |
| **nnpfa_persistence_flag** | u(1) |
| **nnpfa_target_base_flag** | u(1) |
| **nnpfa_no_prev_clvs_flag** | u(1) |
| if( nnpfa_persistence_flag ) | |
| **nnpfa_no_foll_clvs_flag** | |
| **nnpfa_num_output_entries** | ue(v) |
| for( i = 0; i < nnpfa_num_output_entries; i++ ) | |
| **nnpfa_output_flag[ i ]** | u(1) |
| if( more_data_in_payload( ) ) { | |
| **nnpfa_prompt_update_flag** | u(1) |
| if( **nnpfa_prompt_update_flag** ) { | |
| while( !byte_aligned( ) ) | |
| **nnpfa_alignment_zero_bit** | u(1) |
| **nnpfa_prompt** | st(v) |
| } | |
| **nnpfa_num_input_pic_shift** | ue(v) |
| **nnpfa_target_purposes_present_flag** | u(1) |
| if( nnpfa_target_purposes_present_flag ) { | |
| **nnpfa_target_purposes_idc** | u(16) |
| *if( ChromaUpsamplingUpdateFlag )* | |
| ***nnpfa_out_sub_c_flag*** | u(1) |
| *if( ColourizationUpdateFlag )* | |

(continued)

| | |
|---|---|
| ***nnpfa_out_colour_format_idc*** | *u(2)* |
| *if( ResolutionResamplingUpdateFlag ) {* | |
| ***nnpfa_pic_width_num_minus1*** | *ue(v)* |
| ***nnpfa_pic_width_denom_minus1*** | *ue(v)* |
| ***nnpfa_pic_height_num_minus1*** | *ue(v)* |
| ***nnpfa_pic_height_denom_minus1*** | *ue(v)* |
| *}* | |
| *if( PictureRateUpsamplingUpdateFlag )* | |
| *for( i = 0; i < nnpfc_num_input_pics_minus1; i++ )* | |
| ***nnpfa_interpolated_pics****[ i ]* | *ue(v)* |
| *if( TemporalExtrapolationUpdateFlag )* | |
| ***nnpfa_extrapolated_pics_minus1*** | *ue(v)* |
| *if( SpatialExtrapolationUpdateFlag ) {* | |
| ***nnpfa_spatial_extrapolation_left_offset*** | *se(v)* |
| ***nnpfa_spatial_extrapolation_right_offset*** | *se(v)* |
| ***nnpfa_spatial_extrapolation_top_offset*** | *se(v)* |
| ***nnpfa_spatial_extrapolation_bottom_offset*** | *se(v)* |
| *}* | |
| *if( SpatialExtrapolationUpdateFlag \| \| ResolutionResamplingUpdateFlag )* | |
| ***nnpfa_scan_type_idc*** | *u(2)* |
| *}* | |
| } | |
| } | |
| } | |

In a variant, the above syntax is modified by replacing the ChromaUpsamplingUpdateFlag, ResolutionResamplingUpdateFlag, PictureRateUpsamplingUpdateFlag, BitDepthUpsamplingUpdateFlag, ColourizationUpdateFlag, and TemporalExtrapolationUpdateFlag with the ChromaUpsamplingFlag, ResolutionResamplingFlag, PictureRateUpsamplingFlag, BitDepthUpsamplingFlag, ColourizationFlag, and TemporalExtrapolationFlag with the following semantics: The variable nnpfPurpose, specifying the purpose of the NNPF to be used as auxiliary input data to the NNPF, is derived as follows:

- If nnpfa__target_purposes_idc is present, nnpfPurpose is set equal to nnpfa_target_purposes_idc.
- Otherwise, nnpfPurpose is set equal to nnpfc_purpose.

The variables ChromaUpsamplingFlag, ResolutionResamplingFlag, PictureRateUpsamplingFlag, BitDepthUpsamplingFlag, ColourizationFlag, and TemporalExtrapolationFlag, specifying whether nnpfc_purpose indicates the purpose of the NNPF to include chroma upsampling, resolution resampling, picture rate upsampling, bit depth upsampling, colourization, and temporal extrapolation, respectively, are derived as follows for the derivation of variables and operation of the NNPF:

$$\text{ChromaUpsamplingFlag} = ( ( \text{nnpfPurpose} \,\&\, 0x02 ) > 0 ) \;?\; 1 : 0$$

$$\text{ResolutionResamplingFlag} = ( ( \text{nnpfPurpose} \,\&\, 0x04 ) > 0 ) \;?\; 1 : 0$$

$$PictureRateUpsamplingFlag = ( ( nnpfPurpose \& 0x08 ) > 0 ) ? 1 : 0$$

$$BitDepthUpsamplingFlag = ( ( nnpfPurpose \& 0x10 ) > 0 ) ? 1 : 0$$

$$ColourizationFlag = ( ( nnpfPurpose \& 0x20 ) > 0 ) ? 1 : 0$$

$$TemporalExtrapolationFlag = ( ( nnpfPurpose \& 0x40 ) > 0 ) ? 1 : 0$$

$$SpatialExtrapolationFlag = ( ( nnpfPurpose \& 0x80 ) > 0 ) ? 1 : 0$$

In this case, when one of the above flags is equal to 0, it must be understood that the corresponding characteristics information as described in the above syntax, is set to (e.g., hard coded) default values

In another variant, the syntax is modified by moving out of the condition on the metadata *nnpfa target purposes present flag,* the update of the other specific information as shown in the below table.

| nn_post_filter_activation( payloadSize ) { | **Descriptor** |
|---|---|
| **nnpfa_target_id** | ue(v) |
| **nnpfa_cancel_flag** | u(1) |
| if( !nnpfa_cancel_flag ) { | |
| **nnpfa_persistence_flag** | u(1) |
| **nnpfa_target_base_flag** | u(1) |
| **nnpfa_no_prev_clvs_flag** | u(1) |
| if( nnpfa_persistence_flag ) | |
| **nnpfa_no_foll_clvs_flag** | |

| **nnpfa_num_output_entries** | ue(v) |
|---|---|
| for( i = 0; i < nnpfa_num_output_entries; i++ ) | |
| **nnpfa_output_flag**[ i ] | u(1) |
| if( more_data_in_payload( ) ) { | |
| **nnpfa_prompt_update_flag** | u(1) |
| if( nnpfa_prompt_update_flag ) { | |
| while( !byte_aligned( ) ) | |
| **nnpfa_alignment_zero_bit** | u(1) |
| **nnpfa_prompt** | st(v) |
| } | |
| **nnpfa_num_input_pic_shift** | ue(v) |
| **nnpfa_target_purposes_present_flag** | u(1) |
| if( nnpfa_target_purposes_present_flag ) | |
| **nnpfa_target_purposes_idc** | u(16) |
| *if( ChromaUpsamplingUpdateFlag )* | |
| ***nnpfa_out_sub_c_flag*** | *u(1)* |
| *if( ColourizationUpdateFlag )* | |
| ***nnpfa_out_colour_format_idc*** | *u(2)* |
| *if( ResolutionResamplingUpdateFlag ) {* | |
| ***nnpfa_pic_width_num_minus1*** | *ue(v)* |
| ***nnpfa_pic_width_denom_minus1*** | *ue(v)* |
| ***nnpfa_pic_height_num_minus1*** | *ue(v)* |
| ***nnpfa_pic_height_denom_minus1*** | *ue(v)* |
| *}* | |
| *if( PictureRateUpsamplingUpdateFlag )* | |

| | |
|---|---|
| *for( i = 0; i < nnpfc_num_input_pics_minus1; i++ )* | |
| ***nnpfa_interpolated_pics[ i ]*** | *ue(v)* |
| *if( TemporalExtrapolationUpdateFlag )* | |
| ***nnpfa_extrapolated_pics_minus1*** | *ue(v)* |
| *if( SpatialExtrapolationUpdateFlag ) {* | |
| ***nnpfa_spatial_extrapolation_left_offset*** | *se(v)* |
| ***nnpfa_spatial_extrapolation_right_offset*** | *se(v)* |
| ***nnpfa_spatial_extrapolation_top_offset*** | *se(v)* |
| ***nnpfa_spatial_extrapolation_bottom_offset*** | *se(v)* |
| *}* | |
| *if( SpatialExtrapolationUpdateFlag \|\| ResolutionResamplingUpdateFlag )* | |
| ***nnpfa_scan_type_idc*** | *u(2)* |
| } | |
| } | |
| } | |

In another variant, the above syntax is modified by replacing the ChromaUpsamplingUpdateFlag, ResolutionResamplingUpdateFlag, PictureRateUpsamplingUpdateFlag, BitDepthUpsamplingUpdateFlag, ColourizationUpdateFlag, and TemporalExtrapolationUpdateFlag with the ChromaUpsamplingFlag, ResolutionResamplingFlag, PictureRateUpsamplingFlag, BitDepthUpsamplingFlag, ColourizationFlag, and TemporalExtrapolationFlag.

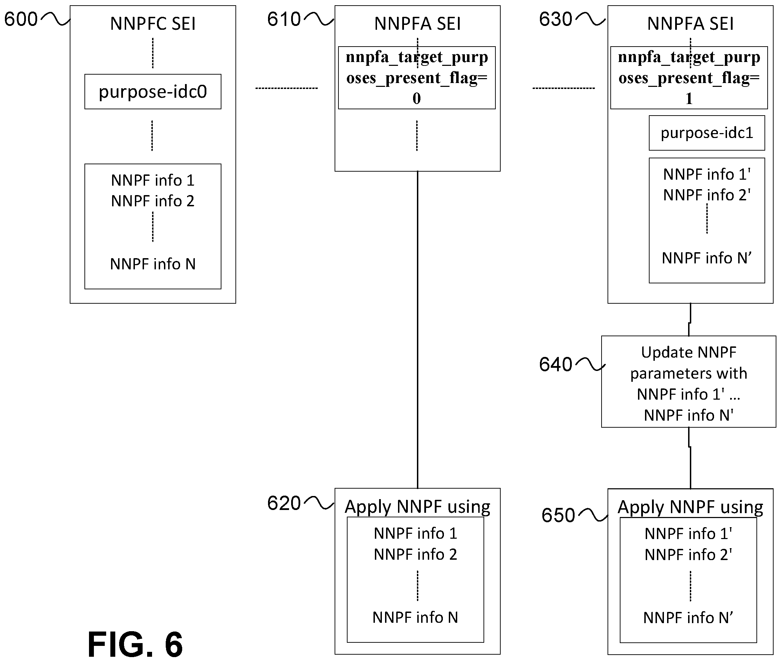

An example implementation is provided in the FIG. 6 which illustrates the update of NNPF parameters when the purpose of the NNPF is updated by a NNPFA.

At 600, information related to an NNPF is signaled in an NNPFC SEI message, with information on the purposes, denoted *purpose-idc0,* of the given NNPF. Information related to the NNPF may contain information on the input images, output images, for example their sizes, colour format, etc. Additional information specific per purpose may also be provided in the NNPFC SEI message. This specific information may modify the information related to the input, output of the NNPF, or other general characteristics of the NNPF. This specific information may consequently change the way the NNPF is applied and the way the output of the NNPF will be used, as for example the output format may be different. The parameters characterizing the NNPF and adapted to its current purpose are noted in the FIG.6 *NNPF info 1 to N.*

At 610, an NNPFA SEI message associated to the NNPFC (for instance, having a target id - signaled in the NNPFA as **nnpfa_target_id** - equal to the id in the NNPFC - signaled in the NNPFC as **nnpfc_id)** is sent to activate the NNPF. The NNPFA SEI message contains a metadata *nnpfa_target_purposes_present_flag* equal to 0. In this case, no update in the NNPF purposes needs to be done. The NNPF is applied using its current purpose and its current parameters at 620. Because there is no update, all characteristics of the NNPF specific to the updated NNPF purposes or that are modified by the choice of a given purpose do not need to be updated and are used with the values that were sent in the NNPF SEI message.

In the example of FIG.6, at 630, a second NNPFA SEI is signaled by the encoder or received by the decoder, where this time the syntax element *nnpfa_target_purposes_present_flag* is equal to 1. In this case, a list of the updated

purposes of the NNPF, denoted *purpose-idcl* is sent. The metadata *purpose-idc1* gives the information on which purposes were updated by the NNPFA message, i.e., the list of all purposes that were turned on in the NNPF SEI message and that are turned off in the NNPFA SEI message, and the list of the purposes that were turned off in the NNPF SEI message and that are turned on in the NNPFA SEI message.

Depending on which purposes were updated by the NNPFA SEI message, all or part of the characteristics of the NNPF specific to the updated NNPF purposes or that are modified by the choice of a given purpose, are updated by sending in the NNPFA SEI message their novel values. These updated characteristics are noted in the FIG.6 *NNPF info 1' to N'.* In this example, at 640, all parameters are updated (the symbol ' applies to all the parameters), but in other examples the update can be done on some of the parameters as described in variants described above.

In this case, at 650, these new parameters are used when applying the NNPF.

In an embodiment, when a specific characteristic is not sent in the NNPFA SEI message, but the specific characteristic relates to a purpose that is updated in the NNPFA SEI message, its value is set back to a default value.

In an embodiment, control metadata per characteristic (e.g., flags) can be sent to replace some of the specific characteristics. In this case, it may be understood that the value of these characteristics is to be set back to a default value.

In an embodiment, the updated parameters / NNPF characteristics are sent in another structure than the NNPFA SEI message, for example, in a new SEI message.

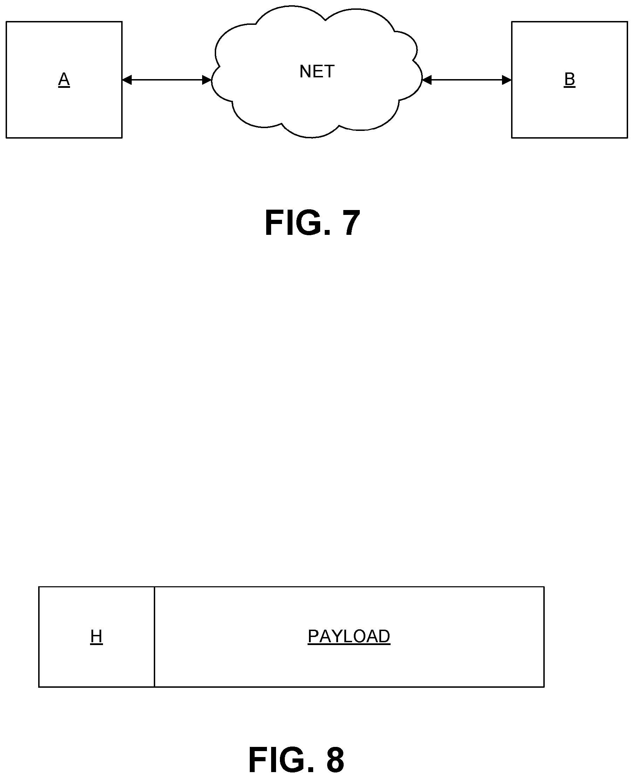

In an embodiment, illustrated in FIG. 7, in a transmission context between two remote devices A and B over a communication network NET, the device A comprises a processor in relation with memory RAM and ROM which are configured to implement a method for signaling updated metadata of NNPF according to any one of the embodiments described herein in relation with FIG. 5 and the device B comprises a processor in relation with memory RAM and ROM which are configured to implement a method for decoding updated metadata of NNPF according to any one of the embodiments described herein in relation with FIG. 4. In accordance with an example, the network is a broadcast network, adapted to broadcast/transmit a coded video from device A to decoding devices including the device B.

FIG. 8 shows an example of the syntax of a signal transmitted over a packet-based transmission protocol. Each transmitted packet P comprises a header H and a payload PAYLOAD. In some embodiments, the payload PAYLOAD may comprise data representative an encoded video and updated metadata of NNPF according to any one of the embodiments described above. The payload can also comprise any signaling as described above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and

the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example,

analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

**1.** A method comprising,

obtaining, from a neural-network post-filter activation (NNPFA) message associated to at least one picture of a video, the NNPFA message indicating that at least one neural-network post-filter (NNPF) is to be applied to the at least one picture, an indication indicating whether at least one purpose of the at least one NNPF is updated,
obtaining an update value of at least one parameter of the at least one NNPF,
updating a value of the at least one parameter of the at least one NNPF with the update value,
applying the at least one NNPF for the at least one purpose that is updated, using the at least one parameter set to the update value.

**2.** The method of claim 1, wherein the at least one parameter is related to the at least one purpose that is updated.

**3.** The method of claim 1 or 2, wherein the update value is obtained from the NNPFA message.

**4.** The method of any one of claims 1-3, wherein the at least one parameter relates to a format of an output produced by the NNPF.

**5.** The method of claim 4 , wherein the at least one parameter comprises at least one of an output size, a resampling ratio numerator, a resampling ratio denominator, an output chroma component, a colour format, a size of chroma channels, a number of interpolated pictures between two input pictures, a number of extrapolated pictures, a size used for computing a spatial extrapolation of input pictures, a preferred display method for pictures output by the NNPF.

**6.** The method of any one of claims 1-5, wherein obtaining an update value is responsive to a determination that the indication indicates that the at least one purpose of the at least one NNPF is updated.

**7.** The method of any one of claims 1-5, further comprising obtaining a value of a control parameter for at least one of the at least one parameter of the at least one NNPF, and wherein obtaining an update value of at least one parameter of the at least one NNPF is responsive to a determination that the value of the control parameter indicates that a value of the at least one parameter is to be updated.

**8.** The method of claim 7, wherein the control parameter is signaled in the NNPFA message.

**9.** The method of claim 7, wherein the value of the control parameter is inferred by determining whether purposes of the NNPF indicated in a neural-network post-filter characteristics (NNPFC) message defining the NNPF are different from purposes of the NNPF indicated in the NNPFA message.

**10.** The method of any one of claims 1-9, wherein the update value is a default value of the at least one parameter of the at least one NNPF.

**11.** The method of any one of claims 1-10, wherein responsive to a determination that the indication indicates that the at least one purpose of the at least one NNPF is updated and to a determination that the update value of at least one parameter of the at least one NNPF is not signaled in the NNPFA, the update value is a default value of the at least one

parameter of the at least one NNPF.

**12.** The method of any one of claims 1-10, wherein obtaining the update value for the at least one parameter comprises decoding a flag indicating whether the update value is a default value or not.

**13.** The method of claim 10, 11 or 12, wherein the default value depends on the purpose of the at least one NNPF that is updated.

**14.** An apparatus comprises one or more processors configured to:

obtain, from a neural-network post-filter activation (NNPFA) message associated to at least one picture of a video, the NNPFA message indicating that at least one neural-network post-filter (NNPF) is to be applied to the at least one picture, an indication indicating whether at least one purpose of the at least one NNPF is updated,
responsive to a determination that the indication indicates that the at least one purpose of the at least one NNPF is updated, obtain an update value of at least one parameter of the at least one NNPF,
update a value of the at least one parameter of the at least one NNPF with the update value,
apply the at least one NNPF for the purpose that is updated, using the at least one parameter set to the update value.

**15.** An apparatus comprises one or more processors configured to:

signal, in a neural-network post-filter activation (NNPFA) message associated to at least one picture of a video, the NNPFA message indicating that at least one neural-network post-filter (NNPF) is to be applied to the at least one picture, an indication indicating whether at least one purpose of the at least one NNPF is updated,
signal an update value of at least one parameter of the at least one NNPF.

105
RF
COMP
USB
HDMI
110
PROCESSOR
120
MEMORY
115
130
ENCODER/
DECODER
140
STORAGE
DEVICE
150
COMMUNICATION
INTERFACE
160
DISPLAY
INTERFACE
170
AUDIO
INTERFACE
180
PERIPHERAL
INTERFACE
165
DISPLAY
DEVICE
175
AUDIO
DEVICE
185
PERIPHERALS
190
COMMUNICATION CHANNEL
100

FIG. 1

ORIGINAL VIDEO
202
IMAGE PARTITIONER
RESIDUAL BLOCKS
210
220
TRANSFORMER
230
QUANTIZER
245
ENTROPY ENCODER
BITSTREAM
PREDICTION BLOCKS
240
INVERSE QUANTIZER
250
INVERSE TRANSFORMER
RECONSTRUCTED RESIDUAL BLOCKS
285
PREDICTION ENHANCER
PREDICTION BLOCKS
255
205
RECONSTRUCTED BLOCKS
260
INTRA PREDICTOR
270
MOTION COMPENSATOR
265
IN-LOOP FILTERS
275
MOTION ESTIMATOR
280
REFERENCE PICTURE BUFFER
200

FIG. 2

CODED VIDEO BITSTREAM
330
ENTROPY DECODER
335
IMAGE PARTITIONER
340
INVERSE QUANTIZER
350
INVERSE TRANSFORMER
RECONSTRUCTED RESIDUAL BLOCKS
390
PREDICTION ENHANCER
PREDICTION BLOCKS
355
RECONSTRUCTED BLOCKS
370
360
INTRA PREDICTOR
375
MOTION COMPENSATOR
365
IN-LOOP FILTERS
RECONSTRUCTED VIDEO
380
REFERENCE PICTURE BUFFER
390
POST FILTERS
POST-FILTERED RECONSTRUCTED VIDEO
300

FIG. 3

400
Obtaining indication that purpose of NNPF is updated
410
Obtaining update value of NNPF parameters
420
Updating value of NNPF parameters
430
Applying updated NNPF
440

FIG. 4

500
Signaling indication that purpose of NNPF is updated
510
Signaling update value of NNPF parameters
520

FIG. 5

600
NNPFC SEI
purpose-idc0
NNPF info 1
NNPF info 2
NNPF info N
610
NNPFA SEI
nnpfa_target_purposes_present_flag=
0
620
Apply NNPF using
NNPF info 1
NNPF info 2
NNPF info N
630
NNPFA SEI
nnpfa_target_purposes_present_flag=
1
purpose-idc1
NNPF info 1'
NNPF info 2'
NNPF info N'
640
Update NNPF parameters with NNPF info 1' ... NNPF info N'
650
Apply NNPF using
NNPF info 1'
NNPF info 2'
NNPF info N'

FIG. 6

A
NET
B

FIG. 7

H
PAYLOAD

FIG. 8

Europäisches
Patentamt
European
Patent Office
Office européen
des brevets

# EUROPEAN SEARCH REPORT

Application Number
EP 25 30 5414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANNUKSELA (NOKIA) M M ET AL: "AHG9: On multi-purpose NNPFs", 38. JVET MEETING; 20250326 - 20250404; TELECONFERENCE; (THE JOINT VIDEO EXPLORATION TEAM OF ISO/IEC JTC1/SC29/WG11 AND ITU-T SG.16 ), , no. JVET-AL0076 19 March 2025 (2025-03-19), XP030333251, Retrieved from the Internet: URL:https://jvet-experts.org/doc_end_user/documents/38_Teleconference/wg11/JVET-AL0076-v1.zip JVET-AL0076-v1.docx [retrieved on 2025-03-19] * abstract * * Section 1; Section 2; Section 3 * | 1-15 | INV. H04N19/117 G06N3/048 H04N19/172 H04N19/70 H04N19/82 H04N19/86 |
| A | WO 2024/146589 A1 (DOUYIN VISION CO LTD [CN]; BYTEDANCE INC [US]) 11 July 2024 (2024-07-11) * paragraph [0030] - paragraph [0191] * | 1-15 | |
| | | | TECHNICAL FIELDS SEARCHED (IPC) |
| A | HANNUKSELA (NOKIA) M M ET AL: "AHG9: Miscellaneous VSEI changes on neural-network post-filter SEI messages", 30. JVET MEETING; 20230421 - 20230428; ANTALYA; (THE JOINT VIDEO EXPLORATION TEAM OF ISO/IEC JTC1/SC29/WG11 AND ITU-T SG.16 ), , no. JVET-AD0056 ; m62657 14 April 2023 (2023-04-14), XP030308643, Retrieved from the Internet: URL:https://jvet-experts.org/doc_end_user/documents/30_Antalya/wg11/JVET-AD0056-v1.zip JVET-AD0056-v1.docx [retrieved on 2023-04-14] * Sections 1-14 * | 1-15 | H04N G06N |

-/--

The present search report has been drawn up for all claims

| Place of search | Date of completion of the search | Examiner |
|---|---|---|
| Munich | 25 August 2025 | Morbee, Marleen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

3

EPO FORM 1503 03.82 (P04C01)

page 1 of 2

# EUROPEAN SEARCH REPORT

Application Number
EP 25 30 5414

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| T | C-H DEMARTY (INTERDIGITAL) ET AL: "AHG9: On Signalling NNPF Characteristics in NNPFA upon Updates of Purposes", 38. JVET MEETING; 20250326 - 20250404; TELECONFERENCE; (THE JOINT VIDEO EXPLORATION TEAM OF ISO/IEC JTC1/SC29/WG11 AND ITU-T SG.16 ), , no. JVET-AL0292 26 March 2025 (2025-03-26), XP030333759, Retrieved from the Internet: URL:https://jvet-experts.org/doc_end_user/documents/38_Teleconference/wg11/JVET-AL0292-v2.zip JVET-AL0292-v2.docx [retrieved on 2025-03-26] * abstract * * Section 1; Section 2 * ----- | 1-15 | |
| T | HANNUKSELA (NOKIA) M M ET AL: "AHG9: NNPFA SEI message extension for multi-purpose NNPFs", 38. JVET MEETING; 20250326 - 20250404; TELECONFERENCE; (THE JOINT VIDEO EXPLORATION TEAM OF ISO/IEC JTC1/SC29/WG11 AND ITU-T SG.16 ), , no. JVET-AL0341 2 April 2025 (2025-04-02), XP030333828, Retrieved from the Internet: URL:https://jvet-experts.org/doc_end_user/documents/38_Teleconference/wg11/JVET-AL0341-v1.zip JVET-AL0341-v1.docx [retrieved on 2025-04-02] ----- | 1-15 | TECHNICAL FIELDS SEARCHED (IPC) |

The present search report has been drawn up for all claims

| Place of search | Date of completion of the search | Examiner |
|---|---|---|
| Munich | 25 August 2025 | Morbee, Marleen |

3

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

page 2 of 2

# ANNEX TO THE EUROPEAN SEARCH REPORT ON EUROPEAN PATENT APPLICATION NO.

EP 25 30 5414

This annex lists the patent family members relating to the patent documents cited in the above-mentioned European search report. The members are as contained in the European Patent Office EDP file on
The European Patent Office is in no way liable for these particulars which are merely given for the purpose of information.

25-08-2025

| Patent document cited in search report | Publication date | Patent family member(s) | Publication date |
|---|---|---|---|
| WO 2024146589 A1 | 11-07-2024 | CN 120476586 A | 12-08-2025 |
| | | CN 120530641 A | 22-08-2025 |
| | | WO 2024146589 A1 | 11-07-2024 |
| | | WO 2024146595 A1 | 11-07-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **SEAN MCCARTHY** ; **JILL BOYCE** ; **JIE CHEN** ; **SACHIN DESHPANDE** ; **MISKA M. HANNUKSELA** ; **HENDRY TAN** ; **YE-KUI WANG**. Technologies under consideration for future extensions of VSEI (version 7). *JVET-AK2032-v1, 37th meeting , Geneva, CH*, 14 January 2025
- **M. HANNUKSELA** ; **F. CRICRI**. AHG9: On multi-purpose NNPFs. *JVET-AL0076-v1, 38th meeting by Teleconference*